(19)

**Europäisches Patentamt**

**European Patent Office**

**Office européen des brevets**

(11) **EP 4 654 152 A1**

(12) **EUROPEAN PATENT APPLICATION**

(43) Date of publication:
**26.11.2025 Bulletin 2025/48**

(21) Application number: **24305798.1**

(22) Date of filing: **22.05.2024**

(51) International Patent Classification (IPC):
**G06V 10/44** *(2022.01)*    **G06V 10/62** *(2022.01)*
**G06V 10/764** *(2022.01)*    **G06V 10/80** *(2022.01)*
**G06V 10/82** *(2022.01)*    **G06V 20/64** *(2022.01)*

(52) Cooperative Patent Classification (CPC):
**G06V 10/82; G06V 10/454; G06V 10/62;**
**G06V 10/764; G06V 10/806; G06V 20/64**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Dassault Systèmes**
**78140 Vélizy-Villacoublay (FR)**

(72) Inventors:
• **CAHU, Arthur**
  **78140 Vélizy-Villacoublay (FR)**
• **MARCUSANU, Ana**
  **78140 Vélizy-Villacoublay (FR)**

(74) Representative: **Bandpay & Greuter**
  **11 rue Christophe Colomb**
  **75008 Paris (FR)**

(54) **TEMPORAL AGGREGATION FOR ONLINE 3D OBJECT DETECTION**

(57) The disclosure notably relates to a computer-implemented method for machine learning a function. The function is configured to take as input a 3D point cloud frame of a real scene and to output localized representations. Each output representation is respective to a respective object of the real scene. The method comprises obtaining a dataset of sequences of 3D point cloud frames. Each frame is associated with a time in the sequence. Each frame comprises localized representations each of a respective object. The method further comprises training the function based on the obtained dataset. The training comprises, for each sequence of the dataset and each given frame of the sequence, training the function to output localized representations of objects in the given frame based on the given frame and on at least the frame with the previous time in the sequence.

FIG. 1

EP 4 654 152 A1

## Description

### TECHNICAL FIELD

The disclosure relates to the field of computer programs and systems, and more specifically to a method, system and program for machine learning a function configured to take as input a 3D point cloud frame of a real scene and to output localized representations each of a respective object of the real scene.

### BACKGROUND

Current state-of-the-art methods in indoor 3D scene understanding like FCAF3D (D. Rukhovich, A. Vorontsova, and A. Konushin, "FCAF3D: Fully Convolutional Anchor-Free 3D Object Detection." arXiv, Mar. 24, 2022. Accessed: Oct. 11, 2022. [Online]. Available: http://arxiv.org/abs/2112.00322) or TR3D (D. Rukhovich, A. Vorontsova, and A. Konushin, "TR3D: Towards Real-Time Indoor 3D Object Detection." arXiv, Feb. 08, 2023. doi: 10.48550/arXiv.2302.02858) rely on machine learning models that are trained in a supervised manner on annotated datasets. These models are trained on datasets that comprise indoor scenes, i.e. furnished rooms. These scenes are represented according to the modalities that have been used to digitalize them, typically 3D point clouds, a camera feed, or a 3D reconstruction thereof. Currently used public datasets include SUN RGB-D (S. Song, S. P. Lichtenberg, and J. Xiao, "SUN RGB-D: A RGB-D Scene Understanding Benchmark Suite," presented at the Proceedings of the IEEE Conference on Computer Vision and Pattern Recognition, 2015, pp. 567-576. Accessed: Nov. 16, 2022. [Online]. Available: https://openac-cess.thecvf.com/con tent_cvpr_2015/html/Song_SUN_RGB-D_A_2015_CVPR_paper.html), ScanNet (A. Dai, A. X. Chang, M. Savva, M. Halber, T. Funkhouser, and M. Nießner, "ScanNet: Richly-annotated 3D Reconstructions of Indoor Scenes." arXiv, Apr. 11, 2017. doi: 10.48550/arXiv.1702.04405) and ARKitScenes (G. Baruch et al., "ARKitScenes: A diverse real-world dataset for 3D indoor scene understanding using mobile RGB-D data," in Thirty-fifth conference on neural information processing systems datasets and benchmarks track (round 1), 2021. [Online]. Available: https://openreview.net/forum?id=tjZjv_qh_CE).

In particular, FCAF3D and TR3D belong to the convolutional neural network (CNN) class of 3D object detection methods, with the following pipeline:

1. Take a 3D point cloud as input.

2. Transform the point cloud into a voxel grid, i.e. a 3D image representation. This is done by considering a grid discretization of the space; if there exists at least one point within a given volume element in 3D space, the corresponding 3D voxel will be considered as occupied. One can consider this as the generalization of the pixellic 2D image representation to the 3D domain. One important parameter of this voxelization is the grid size - typically between 0.5 and 30 cm. The higher this grid size, the lower the resolution of the 3D representation, and thus the lower the potential quality of the subsequent predictions of the model. However, an increased grid size allows to lower the computational and memory cost of the subsequent pipeline.

3. Apply a neural network consisting of multiple 3D convolution layers. This can be done using Minkowski Engine (C. Choy, J. Gwak, and S. Savarese, "4D Spatio-Temporal ConvNets: Minkowski Convolutional Neural Networks." arXiv, Jun. 13, 2019. doi: 10.48550/arXiv.1904.08755), which allows to efficiently compute 3D convolutions on sparse (mostly empty) voxel grids.

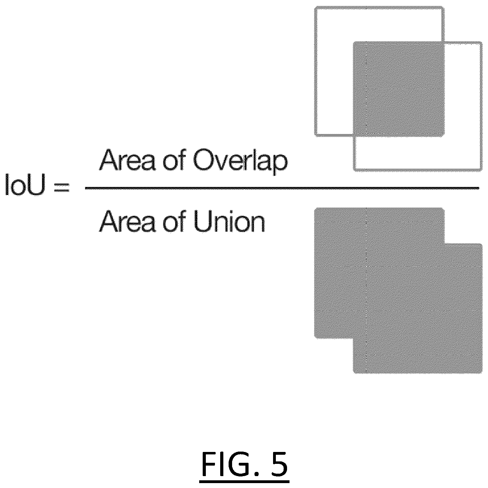

4. Object detection methods output multiple predictions, which can a) be a large number (over a thousand) of detected objects, and b) have significant overlap between each other. One intuition for this is that a detection model will correctly identify multiple parts of e.g. a given chair, as well as the whole chair itself - but output them as different detections. A common post-processing algorithm introduced in R-CNN (R. Girshick, J. Donahue, T. Darrell, and J. Ma-lik, "Rich feature hierarchies for accurate object detection and semantic segmentation." arXiv, Oct. 22, 2014. doi: 10.48550/ar-Xiv.1311.2524.) is non-maximum suppression (NMS), which addresses these issues by removing the smaller prediction of the same semantic category (e.g. "chair") when its overlap with a bigger prediction reaches or exceeds a set threshold. This post-processing algorithm has no learned or otherwise trained parameters. When considering prediction as bounding boxes, this overlap is measured as intersection over union (IoU $\in$ [0,1]). For 3D bounding boxes, these union and intersection values are computed as volumes; for the sake of clarity, the 2D equivalent is visualized as areas on FIG. 5. Example IoU thresholds for NMS are 0.25 and 0.5.

Taking advantage of the static nature of indoor scenes, state-of-the-art indoor 3D object detection methods pre-process the data representing a given scene by removing any temporal data associated with the acquisition method and simply grouping all inputs together. For that reason, they may be called "offline" methods. Offline methods enforce an invariance to the order in which data was acquired and forces deep learning models to focus on spatial relationships and consider other objects in a room. However, this also enforces a bias that input scenes have been scanned in their entirety, making detection models rely on other objects in the room to guide predictions, limiting the quality of their predictions in online detection scenarios. When considering the use of such models, one reasonable requirement is the ability to provide the user with detection feedback during acquisition, i.e. giving predictions on what the user has just scanned, which is referred to as online detection. The aim of this requirement is to suggest whether further scans of a given part of the scene is needed or if the user can move on to other sections of the scene.

In addition, to provide user feedback during acquisition, such models must be evaluated in their entirety on successive subsets of the whole scene, including points that have already been acquired by the user. This sub-optimal scheme requires redundant computations, thereby increasing consumption of computer resources.

One example of such an offline method that tries to solve the online problem is Apple's RoomPlan ("3D Parametric Room Representation with RoomPlan," Apple Machine Learning Research. Accessed: Oct. 13, 2022. [Online]. Available: https://ma-chinelearning.apple.com/research/roomplan). To be able to repeatedly detect objects in real-time, they use the following design choices:

1. They choose a 3D CNN architecture with a high voxel size of 15 cm, making it very hard to identify objects smaller than this size such as books. As shown in the FCAF3D paper, lowering the resolution of a state-of-the-art 3D CNN from 1 cm to 3 cm already degrades the quality of detections in general. This seems to be the reason why RoomPlan only aims to detect large objects: "storage, sofa, table, chair, bed, refrigerator, oven, stove, dishwasher, washer or dryer, fireplace, sink, bathtub, toilet, stairs, and TV".
2. They directly predict bounding boxes from disjoint subsets of the input point cloud using a local detector during online scanning, then aggregate these bounding boxes using an undisclosed algorithm.

One could argue that online 3D object detection is already performed by outdoor object detection methods typically designed for robotics or autonomous driving. Indeed, they need to take into account spatio-temporal relationships in order to accurately detect potentially occluded objects inside a dynamic scene.

However, outdoor models are tasked with detecting potential obstacles, i.e. large objects, whereas rooms (indoor scenes) feature both large furniture and small objects such as books. In addition, outdoor detection aims at detecting objects that each occupy their own vertical space, such as pedestrians or cars; in fact, state-of-the-art 3D outdoor detection models such as PointPillars (A. H. Lang, S. Vora, H. Cae-sar, L. Zhou, J. Yang, and O. Beijbom, "PointPillars: Fast Encoders for Object Detection From Point Clouds," presented at the Proceedings of the IEEE/CVF Conference on Computer Vision and Pattern Recognition, 2019, pp. 12697-12705. Accessed: Oct. 14, 2022. [Online] Available https:// openaccess.thecvf.com/content_CVPR_2019/html/Lang_PointPillars_Fast_EncodersforObject_Detection_From_Point_Clouds_CVPR_2019_paper.html), BEVFusion (Z. Liu et al., "BEVFusion: Multi-Task Multi-Sensor Fusion with Unified Bird's-Eye View Representation." arXiv, Jun. 16, 2022. doi: 10.48550/arXiv.2205.13542.) or EA-LSS (H. Hu et al., "EA-LSS: Edge-aware Lift-splat-shot Framework for 3D BEV Object Detection." arXiv, Aug. 29, 2023. doi: 10.48550/ar-Xiv.2303.17895.) explicitly integrate this prior by embedding the multi-sensor inputs into a unified 2D bird's eye (i.e. top-down) view. This reduction of a 3D problem to a 2D one would not work for indoor scenes, which comprise objects arranged in a truly 3D fashion, such as hanging plants or books on tables.

There is thus a need for improved solutions for outputting localized representation of objects (*e.g.* for object detection or for scene segmentation) in 3D point clouds representing real 3D scenes.

**SUMMARY**

It is therefore provided a computer-implemented method for machine learning a function. The function is configured to take as input a 3D point cloud frame of a real scene and to output localized representations. Each output representation is respective to a respective object of the real scene. The method comprises obtaining a dataset of sequences of 3D point cloud frames. Each frame is associated with a time in the sequence. Each frame comprises localized representations each of a respective object. The method further comprises training the function based on the obtained dataset. The training comprises, for each sequence of the dataset and each given frame of the sequence, training the function to output localized representations of objects in the given frame based on the given frame and on at least the frame with the previous time in the sequence.

The method may comprise one or more of the following:

- the function comprises:

  ○ a first neural network configured to take as input a frame and to output at least a feature vector corresponding to localized representations each of a respective object in the frame; and
  ○ a second neural network configured to aggregate the feature vectors outputted by the first neural network for said given frame and for at least the frame with the previous time in the sequence;

- the first neural network is configured to take as input a frame and to output two or more feature vectors each corresponding to a different resolution level, and the second neural network is configured to perform two or more aggregations each corresponding to the feature vectors of a same resolution level;
- the first neural network is a convolutional neural network (CNN), and/or the second neural network is a combination of transformer neural networks and convolutions;
- each 3D point cloud frame of the real scene represents a partial view of the real scene;
- the training comprises a batch training;
- each batch respects a frame chronological order so that, during the batch training, the function does not output localized representations for the batch based on frames associated with future times;

- in the obtained dataset, each sequence of point cloud frames $(X_1, X_2, \dots, X_T)$, where $X_t \in \mathbb{R}^{n_t \times 3}$ is the point cloud frame at time $t$ and contains $n_t$ points, is defined by the following rule:

$$\begin{cases} \forall t \in [\![1, T]\!], X_t := \bigcup_{v=k \times (t-1)+1}^{\max(k \times t, V)} \mathcal{T}(I_v) \\ T := ceil\left(\dfrac{V}{k}\right) \end{cases}$$

where *ceil* is a ceiling function, and $(I_1, I_2, \dots, I_V)$ is a sequence of depth images of the scene, and where $\mathcal{T}$ is a back-projection operator that projects a pixel of a depth image to a 3D point;
- the scene is an indoor scene; and/or
- the 3D point cloud frames of the obtained dataset stem from physical measurements (*e.g.* physical scan) or from virtual measurements (*e.g.* virtual scan).

It is also provided a function obtainable according to the method.

It is also provided a computer-implemented method of use of the function. The method of use comprises providing a sequence of 3D point cloud frames of a real scene. The method of use also comprises, for each frame of the sequence, determining localized representations each of a respective object of the real scene in the frame by applying the function to the frame. The application of the function is based at least on a feature vector corresponding to localized representations each of a respective object in the previous frame.

It is further provided a computer program comprising instructions for performing the method and/or the method of use.

It is further provided a device comprising a data storage medium having recorded thereon the computer program and/or the function.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

**BRIEF DESCRIPTION OF THE DRAWINGS**

Non-limiting examples will now be described in reference to the accompanying drawings, where:

- FIG.s 1 to 6 illustrate the methods; and

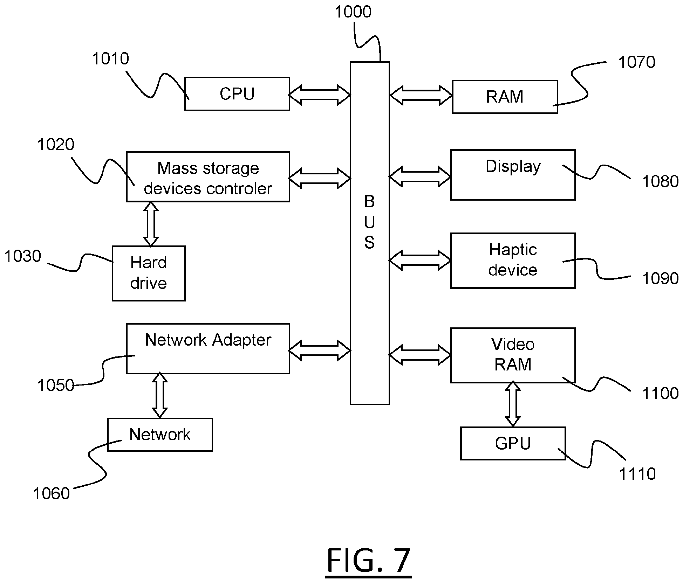

- FIG. 7 shows an example of the system.

**DETAILED DESCRIPTION**

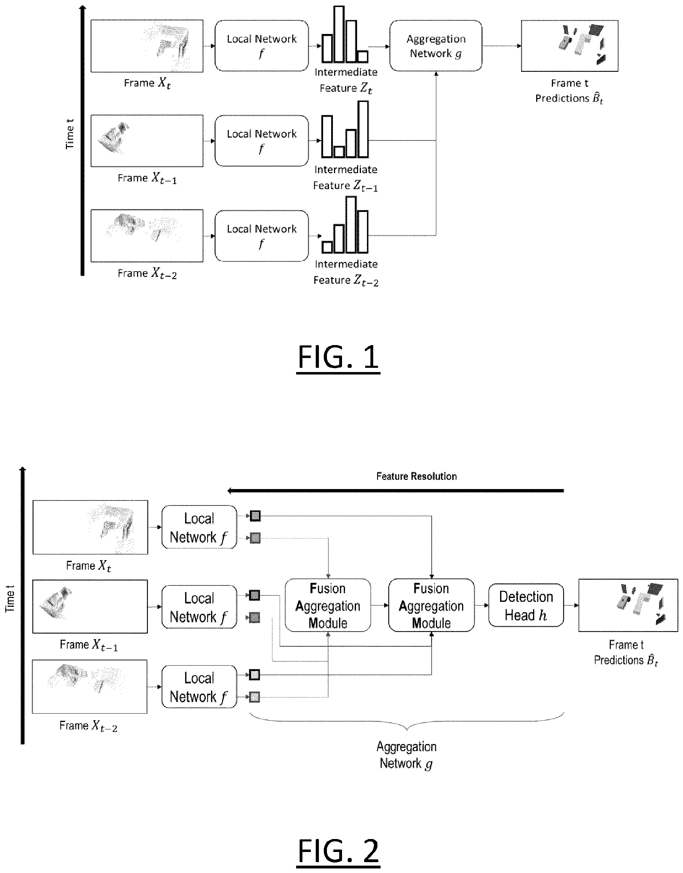

With reference to the flowchart of FIG. 1, it is proposed a computer-implemented method for machine learning a function. The function is configured to take as input a 3D point cloud frame of a real scene and to output localized representations. Each output representation is respective to a respective object of the real scene. The method comprises obtaining a dataset of sequences of 3D point cloud frames. Each frame is associated with a time in the sequence. Each frame comprises localized representations each of a respective object. The method further comprises training the function based on the obtained dataset. The training comprises, for each sequence of the dataset and each given frame of the sequence, training the function to output localized representations of objects in the given frame based on the given frame and on at least the frame with the previous time in the sequence.

The method constitutes an improved solution for outputting localized representations of objects in a 3D point cloud representing a scene.

Indeed, the method trains the function to perform this output based on a sequence of 3D point cloud frames, each frame being associated with a time in the sequence (*i.e.* the sequence is thus temporal with each frame corresponding to a time in the sequence). Such a sequence may typically correspond to a real-time 3D scan of the real scene, the scan progressively scanning the scene and thereby acquiring continuously (*i.e.* at short regular time intervals) 3D point cloud frames, each corresponding to a spatial portion of the scene and acquired at a certain time of the scanning process. This may for example correspond to a user moving in the scene (*e.g.* a furnished indoor room) and operating a scanning device to scan the scene. The function is trained to output, for a given input frame, the localized representations by accounting for not only this frame but also at least the preceding one in the sequence (*i.e.* at least the frame having the previous time in the sequence). The function thus learns inference of spatial relationships between different frames (*i.e.* spatial relationships between different regions of the scene) as well as temporal relationships between the different frames of the sequence. This improves the accuracy of the output.

Furthermore, the function is trained with the consideration of saving computing resources during use of the function (also referred to as online/inference phase/stage). Indeed, the real scene is captured by a sequence of 3D point cloud frames (*e.g.* because it corresponds to an acquisition with a 3D scan or the like which cannot physically acquire a same measurement of the whole scene with a single point cloud/image taken from a single viewpoint; alternatively such sequence may correspond to a user operating the scanning device (*e.g.* with their phone) by walking in the scene and capturing the scene sequentially by moving the device). Performing determination of the localized representations based on each single frame taken individually may lead to a lack of accuracy, because spatial and/or temporal relationships between the frames would not be accounted for, or at least not sufficiently. To the contrary, performing determination of the localized representations using all the frames together in a same computation step would increase the consumption of the memory and computing resources of the computer system. The method provides balance between these two possibilities by, for each given frame of the sequence, determining the localized representations in the frame using the computations (*e.g.* the feature vectors discussed hereinafter) already made for at least the previous frames in the sequence (*e.g.* only this frame, or the two previous ones, or the three previous ones). This allows to account for spatial relationships as well as temporal relationships between the different frames of the sequence as previously said, which provides accuracy, while efficiently reusing computations which have been already made. In particular, during use, for a given frame to be processed by the function, only the computations (*e.g.* the feature vectors discussed hereinafter, which by the way are cheaper in terms of memory resources for storage than the corresponding frames themselves) made for at least the previous frame (*e.g.* only the previous one, or only the two previous ones) need to be stored in the RAM (random access memory) or VRAM (Video RAM) of the computer or in the cache of a computer software application performing the method to be accessible by the function and used together with said given frame for outputting localized representations in said given frame.

The method is for machine learning of a function, which is a neural network (also referred to as "neural network function"), a neural network being possibly a composition of neural networks and optionally of one or more deterministic layers, the composition being itself regarded as a neural network. The method is thus a method of machine learning, which learns/trains the function. As known *per se* from the field of machine-learning, the processing of an input by a neural network includes applying operations to the input, the operations being defined by data including weight values. Learning a neural network thus includes determining values of the weights based on a dataset configured for such learning, such a dataset being possibly referred to as a learning dataset or a training dataset. For that, the dataset includes data pieces each forming a respective training sample. The training samples represent the diversity of the situations where the neural network is to be used after being learnt. Any training dataset herein may comprise a number of training samples higher than 1000, 10000, 100000, or 1000000. In the context of the present disclosure, by "learning a neural network (or function) based on a dataset", it is meant that the dataset is a learning/training dataset of the neural network, based on which the values of the weights (also referred to as "parameters") are set. In the present disclosure, the training dataset is the obtained dataset of sequences of 3D point cloud frames, on which the function is learnt.

The function is configured to (*i.e.* trained to) take as input a 3D point cloud frame of a real scene and to output localized representations each of a respective object of the real scene. The function may for example take as input a sequence of point cloud frames and compute the localized representation for each frame in the sequence, each time using at least the previous frame (*i.e.* at least the one with the previous time in the sequence), or computations made for said at least previous frame (*e.g.* the feature vector(s) thereof as previously discussed). The function may alternatively take each frame of the sequence as input separately and sequentially (one by one) according to the temporal order of the frames in the sequence, and for each frame, compute the localized representation using at least the previous frame (*i.e.* at least the one with the previous time in the sequence), or computations made for said at least previous frame (*e.g.* the feature vector(s) thereof as previously discussed), for example, as previously discussed, by accessing the results of these computations (*e.g.* the feature vectors) from the RAM or VRAM of the computer or from the cache of a computer software application performing the method. In any case, the function may output the localized representations computed for each frame or may alternatively apply a post-processing module to filter predictions and keep the most relevant ones which are then outputted, as further discussed hereinafter.

A 3D point cloud frame is a 3D point cloud that corresponds to a partial view of the real scene, *i.e.* that is a 3D point cloud representation of this partial view. Any 3D point cloud or point cloud frame herein is a set of 3D points (*i.e.* each being equipped with a triplet of coordinates in the 3D space) each representing a location in the scene (or partial view of the scene, where appropriate) represented by the point cloud or point cloud frame. Each point may in examples be further equipped with one or more additional coordinates (*e.g.* RGB coordinates) that represent a color of the location. In these examples, the function thus accounts for colors in the scene. A real scene means a portion of the real world (*e.g.* a view of a real-world room such as a kitchen). Any scene herein may be an indoor scene, such as a furnished room. The function is thus configured to, *i.e.* is trained to and has a structure adapted to, take as input a 3D point cloud frame. This does not exclude, during use, the function being used for several frames to output localized representations for one of these frames while accounting for the others, as further discussed herein after.

The function outputs localized representations each of a respective object of the real scene (*i.e.* represented by the input point cloud frame). A localized representation of a respective object is data representing a geometric position of the object in the scene and data representing a semantic class of the object (the class being for example a type of object such as a type of furniture, or a segment type for a segmentation of the scene). The data representing the geometric position may be a bounding box (*e.g.* rectangular or circular) around or substantially around the object. The bounding box may be defined by a set of coordinates (*x, y, z*) representing a 3D position (*e.g.* of its center), a size (*w, l, h)* (width, length, height) and an orientation $\theta$. The data representing the semantic class may be any suitable type of data, such as a label or a string description describing the object inside the box. The semantic class may be a semantic class of a segmentation (*e.g.* a type of segment), or a type of the object (*e.g.* a type of furniture or indoor object if the scene represents a room scene). All the semantic classes herein may belong to a predetermined set of semantic classes (*e.g.* between 10 and 40 semantic classes, for example 32 semantic classes), *e.g.* each being respective to a type of object (hoven, dish washer, fridge or the like). Any object herein may be a large object (*e.g.* a large furniture, such as a fridge), or a small object (*e.g.* a large indoor item, such as a book). A small object may herein be defined as an object having a volume smaller than 0.01 m$^3$ and/or a maximal dimension smaller than 0.3 m.

The method comprises obtaining a dataset of sequences of 3D point cloud frames.

The dataset thus consists of sequences, each sequence being a sequence of 3D point cloud frames. The point cloud frames of each sequence may all be relative to a same scene, *i.e.* each frame of the sequence represents a partial view of a same scene (which is thus respective to the sequence). The sequences of the dataset may all or substantially all be respective to scenes of a same type, such as scenes which all or substantially all are indoor scenes, *e.g.* of a furnished room (*e.g.* all house indoor scenes), *e.g.* of a room of a same type (*e.g.* all kitchen scenes, or any other type of indoor room). The extent to which all or substantially all the scenes represent a room of a same type may vary and may depend on the intended use of the function. For example, if it is intended for the function to be specialized for a same type of room (*e.g.* kitchen), then all or substantially all the scenes considered in the dataset may be of this type (*e.g.* all kitchen). Alternatively, if it is intended for the function to apply more generally to any indoor scene, *e.g.* any indoor room scene, then the dataset may comprise sequences relative to various types of indoor (*e.g.* room) scenes.

For each sequence, each frame is associated with a time in the sequence. This orders the frames in the sequence according to the time. For example, each sequence may be of the type $(X_1, X_2, ... , X_T)$, where $X_t \in \mathbb{R}^{n_t \times 3}$ is the point cloud frame associated with time $t \in \{1, ..., T\}$. Thus, any frame $X_t$ has a preceding frame $X_{t-1}$ (except for $X_1$), also referred to as "the frame with the previous time in the sequence", and a next frame $X_{t+1}$ (except for $X_T$), also referred to as "the frame with the next time in the sequence". Each time $t$ may be or correspond to a time of acquisition of the frame, or may be deduced from this acquisition time (*e.g.* up to a re-scaling or the like).

Each frame comprises localized representations each of a respective object. As explained above, each localized representation (respective to an object) is data representing a geometric position of the object in the scene and data representing a semantic class of the object (the class being for example a type of object such as a type of furniture, or a segment type for a segmentation of the scene). The data representing the geometric position may be a bounding box (*e.g.* rectangular or circular) around or substantially around the object. The bounding box may be defined by a set of coordinates (*x, y, z*) representing a 3D position (*e.g.* of its center), a size (*w, l, h)* (width, length, height) and an orientation $\theta$. The data representing the semantic class may be any suitable type of data, such as a label of the bounding box or a string description describing the object inside the box (or its class). The semantic class may be a semantic class of a segmentation (*e.g.* a type of segment), or a type of the object (*e.g.* a type of furniture or indoor object if the scene represents a room scene). All the semantic classes herein may belong to a predetermined set of semantic classes, *e.g.* each being respective to a type of object (hoven, dish washer, fridge or the like). Thus, the function may be used for segmentation of a real scene, or for detection of bounding boxes around objects in the scene and associated semantic classes. The function may output localized representations for all or substantially all the objects (*e.g.* associated with a class belonging to a predetermined set of classes, *e.g.* a predetermined set of furniture and/or indoor items). For that, the training dataset may comprise frames capturing an appropriate variability and quantity of these objects, as known in the field of machine-learning.

Each sequence of the training dataset may be obtained from raw 3D data representing the scene corresponding to the sequence (*e.g.* data measured by physical sensor(s) such as a scanning device (*e.g.* 3D scan) or the like of a scene, or data corresponding to a virtual scan or the like of a scene). An example of a process for obtaining the sequences based on such raw 3D data is now discussed. Obtaining the dataset may comprise performing this process, or, alternatively, retrieving (*e.g.* downloading) a dataset already obtained from this process, form a (*e.g.* distant) memory or server or database or cloud where the dataset has been stored further to its obtention.

The process starts with obtaining, with a physical scanning device or a virtual scanning device, the raw 3D data (*i.e.* for each sequence) as a video stream, where the value at each pixel corresponds to the distance between the object shown on the picture and the camera/scanning device (the pixel may further comprise RGB data as previously outlined). Using known camera parameters - including its 3D position and orientation - each pixel is then mapped to a point in 3D space according to the geometric back-projection operation T. Each of these pictures is referred to as a depth image or depth map *I,* and is back-projected into a distinct 3D point cloud $\mathcal{T}$ (*I*).

The resolution of any depth image herein may range between low-resolution 128×128, to 256×192 (*e.g.* for consumer-grade mobile devices), to 1920×1440 or above (*e.g.* for professional devices). Each pixel corresponds to a 3D point, and the scanning device may also compute an additional confidence score ranging from 1 (best) to 3 (worst) that estimates the accuracy of the position of each point, allowing to reject positions that may have been incorrectly measured. Additionally, the device may select when to take pictures based on heuristics indicating a sufficient difference between each depth map such as time between each capture, distance travelled, or camera rotation. In this context, camera position and orientation may be obtained through a combination of e.g. odometry from an on-device accelerometer and/or a registration algorithm.

As previously outlined, any point cloud (*e.g.* obtained from a depth map) discussed above may be either obtained from a real device in a real indoor scene, or from a simulated camera moving inside a virtual 3D scene. While real acquisition more closely matches the intended use case, simulated acquisition inside a virtual environment with known geometry allows to generate robust synthetic data with rich semantic annotations without the need for human annotators. The point cloud depth maps may in particular be obtained by applying the method for generating a training dataset disclosed in European Patent Application EP23305001.2, which is incorporated herein by reference.

In implementations, in the obtained dataset, each sequence of point cloud frames is denoted as $(X_1, X_2, \ldots, X_T)$, where $X_t \in \mathbb{R}^{n_t \times 3}$ is the point cloud frame at time *t* and contains $n_t$ points. The definition of this integer time *t* is deliberately loose, as in the training stage it is a matter of implementations. However, in implementations, given a sequence of depth images $(I_1, I_2, ..., I_V)$ as described above, the resulting point clouds (*i.e.* the point clouds resulting from the images) may be grouped in frames of *k* images according to the following rule:

$$\begin{cases} \forall t \in [\![1, T]\!], X_t := \bigcup_{v=k\times(t-1)+1}^{\max(k\times t, V)} \mathcal{T}(I_v) \\ T := ceil\left(\dfrac{V}{k}\right) \end{cases}$$

where *ceil* is the ceiling function. The process may thus implement the above rule. However, the process could alternatively regroup images into frames according to other criteria such as timestamps, relative positions, or difference between camera parameters. Note that these frames may overlap each other, such that any given object may appear (at least in part) in multiple frames in the sequence.

In implementations, numerical values for the above variables may include:

- The number of images (or views) *V* lies in the $[\![1, 175]\!]$ range depending on the scene, with a mean of 101 images in the case of simulated acquisition; for real devices, a given scene may correspond to tens of thousands of images;
- The number of images per frame *k* may be arbitrary and may be used to control the trade-off between having many frames with a low number of points per frame (*k* = 1) and going back to the offline setting with a single point cloud frame (*k* = ∞). The inventors tested values in the $[\![1, 10]\!]$ range, settling on *k* = 10, resulting in an average of *T* = 10 frames per scene. This grouping is important in the testing: for *k* = 1, the inventors found that the local network *f*, which computes spatial relationships inside each frame, does not have enough spatial information to enable the online model to produce accurate predictions.

- A total number of points ranging from thousands to tens of millions in a given scene; to facilitate computations, the method may sample $n_t \in [1000, 10000]$ points per frame $X_t$, with the higher end of the range giving better results.

Note that there are other methods of acquiring point clouds, and these may be used in alternative implementations. For example, some professional devices do not output depth maps, but instead directly output 3D point clouds based on 360° scans. Note that any such device would still have to contend with occlusion issues, requiring the user to move it to completely capture complex scenes. Thus, regardless of the manner in which the point clouds were acquired, the dataset consists of sequences of frames $(X_1, X_2, \ldots, X_T)$.

Further to the obtention of the training dataset, the method comprises training the function based on the obtained dataset (*i.e.* the obtained dataset is a training dataset for the training of the function). The training comprises, for each sequence of the dataset and each given frame of the sequence, training the function to output localized representations of objects in the given frame based on the given frame and on at least the frame with the previous time in the sequence (*i.e.* using only the frame with the previous time in the sequence or possibly one or more previous frames).

The function may comprise (*e.g.* be or include a composition of) two neural networks. The two neural networks comprise a first neural network and a second neural network. The first neural network is configured to take as input a frame and to output at least a feature vector corresponding to localized representations each of a respective object of the real scene. The feature vector may also be referred to as "embedding", as known in the field of machine-learning, and forms a compact representation that captures the localized representations (*e.g.* all of them) in the frame (*i.e.* 3D point cloud frame) taken as input by the first neural network. The second neural network is configured to aggregate the feature vectors outputted by the first neural network for said given frame and for at least the frame with the previous time in the sequence. In other words, the first neural network, for each sequence encountered, takes as input (successively or in a batched fashion) all the frames of the sequence and outputs a respective feature vector for each respective frame taken as input. For each feature vector outputted by the first neural network, the second neural network aggregates this feature vector with the feature vector of the frame that is associated with the previous time in the sequence, and possibly one or more feature vectors corresponding the one or more frames associated with the one or more times before the previous time (*e.g.* the previous time, or the two previous times, or the three previous times). The first neural network may be referred to as "the local network" or "the backbone network" and denoted by $f$. This neural network is evaluated separately and exactly once on each point cloud frame in the input sequence. The second neural network may be referred to as "the aggregating network" and denoted by $g$. This neural network receives the outputs of the local neural network as a sequence, and either outputs predictions for the last frame in the sequence, or predictions for each frame in the sequence. The function may also comprise a detection head applied to the result of the aggregation, as further discussed hereinafter.

The first neural network may be configured to take as input a frame and to output two or more feature vectors each corresponding to a different resolution level. In other words, the first neural network outputs two or more feature vectors for each input frame, and each of these outputted vectors corresponds to a different resolution level for the localized representations of objects in the frame. These various levels of resolution allow to account for different sizes of the objects (*i.e.* for objects of various sizes). In this case, the second neural network is configured to perform two or more aggregations each corresponding to the feature vectors of a same resolution level. In other words, for each frame (or feature vector) involved in the aggregation performed by the second neural network (*i.e.* the given input frame and the one or more previous ones), two or more aggregation of these frame feature vectors are performed, one for each resolution level (*i.e.* one aggregation is performed with all the frame feature vectors for the highest resolution level, one aggregation is performed with all the frame feature vectors for the next highest resolution level, and so on until the lowest resolution level). The first neural network may be a convolutional neural network (CNN). The second neural network may be a combination of transformer neural networks and convolutions. The method may consider two resolution levels, three resolution levels, or four resolution levels. Each resolution level may be or correspond to a depth level. The resolution levels used for the aggregation may be 8cm, 16cm, 32cm, and 64 cm (with the levels 16cm and 32cm being particularly useful).

The local neural network (or backbone) $f$ is first evaluated independently on each of the point cloud frames $X_t$, outputting intermediate *features* (or embeddings) $Z_t = f(X_t)$. In implementations, these features are intermediate computations of a custom variant of TR3D (discussed in reference D. Rukhovich, A. Vorontsova, and A. Konushin, "TR3D: Towards Real-Time Indoor 3D Object Detection." arXiv, Feb. 08, 2023. doi: 10.48550/arXiv.2302.02858, which is incorporated herein by reference), such that a lightweight parametric function (referred to as a "detection head" in the previously cited reference) $h$ may be applied to give initial frame-wise predictions $\check{B}_t = h(Z_t)$. The composition of the two functions $h \circ f$ may thus have the architecture of a 3D object detection neural network and is heavily inspired by TR3D. In implementations, these initial predictions $\check{B}_t$ are not computed at the inference stage. They are rather used as part of a loss function when training the neural network.

The aggregation neural network $g$ then uses the intermediate features $Z_t$ outputted by the local neural network to generate the final predictions $\hat{B}_t = g(Z_t, Z_{t-1}, \ldots, Z_{t-\delta t+1})$, where $\delta t \in [\![1, t]\!]$. As illustrated on FIG. 1, which illustrates the architecture of the composition of the local and aggregation neural networks in implementations, the output predictions $\hat{B}_t$ correspond to objects in the current frame $X_t$ only but are conditioned on the intermediate features of the past $\delta t$ frames. Depending on hardware constraints, the model may take up to all past frames into account by choosing $\delta t = t$. However, smaller values of $\delta t$, such as $\delta t = 2$, $\delta t = 3$ or $\delta t = 4$ may be preferably considered, to save computing resources (because less previous frames will be considered and thus impact the computer memory for a given input frame). $\delta t$ may thus take any value in $\{2, ..., t\}$, but values smaller than $t$ are preferred, for example $\delta t = 2$, $\delta t = 3$ or $\delta t = 4$.

In implementations, the aggregation network $g$ corresponds to a sequence of Fusion Aggregation Modules (FAM), to which is appended a detection head $h$. This is illustrated on FIG. 2, which shows the architecture. The FAM is based on TransPillars (discussed in reference Luo, G. Zhang, C. Zhou, T. Liu, S. Lu, and L. Pan, "TransPillars: Coarse-to-Fine Aggregation for Multi-Frame 3D Object Detection." arXiv, Aug. 04, 2022. doi: 10.48550/arXiv.2208.03141, which is incorporated herein by reference), which uses a similar concept to 2D feature maps for online outdoor detection. The implementation may adapt this concept to 3D features as follows: transform images tokens (patches), apply a transformer, and in output recombine the patches. As previously explained, and as known from the field of CNNs, features from different resolution levels (or depth) may be outputted to account for the different possible sizes of objects to detect. For instance, previously discussed TR3D outputs 2 features per input point cloud, while FCAF3D (discussed in reference D. Rukhovich, A. Vorontsova, and A. Konushin, "FCAF3D: Fully Convolutional Anchor-Free 3D Object Detection." arXiv, Mar. 24, 2022. Accessed: Oct. 11, 2022. [Online]. Available: http://arxiv.org/abs/2112.00322, which is incorporated herein by reference) outputs 4 features per input. As such, aggregation network implementations consist of at least one FAM per resolution level. FIG. 2 illustrates the aggregation network with 2 resolution levels and 1 FAM per resolution level, which corresponds to implementations of the method.

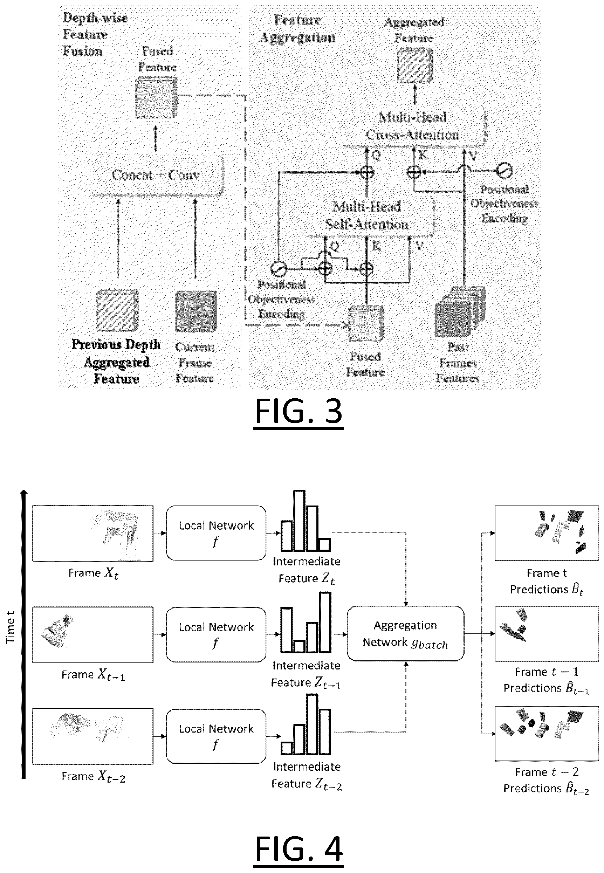

In implementations, features from the high-resolution level are processed first, then passed to the next FAM to fuse features from its resolution level together with the higher resolution level. The outputs of all FAMs are then fed to the detection head to output the final predictions. For the sake of clarity and readability, the connections between the FAMs and the detection head are however not shown on FIG. 2. In these implementations, each FAM consists of a combination of 3D convolution layers and Transformer layers (discussed in reference A. Vaswani et al., "Attention Is All You Need." arXiv, Dec. 05, 2017. doi: 10.48550/arXiv.1706.03762, which is incorporated herein by reference) with deformable attention (as discussed in reference X. Zhu, W. Su, L. Lu, B. Li, X. Wang, and J. Dai, "Deformable DETR: Deformable Transformers for End-to-End Object Detection." arXiv, Mar. 17, 2021. Accessed: Oct. 17, 2022. [Online]. Available: http://arxiv.org/abs/2010.04159, which is incorporated herein by reference). The FAM architecture is illustrated by FIG. 3.

It is to be noted that the above description of both the aggregation network $g$ and FAMs are implementation details of a neural network which has been tested by the inventors and considered to provide satisfactory results. Alternative suitable architectures or modifications may however be considered such as: using scaled dot product attention (discussed in previously discussed reference A. Vaswani et al., "Attention Is All You Need." arXiv, Dec. 05, 2017. doi: 10.48550/arXiv.1706.03762) rather than the previously discussed deformable attention or using coarse-to-fine fusion aggregation order instead of fine-to-coarse. Networks with either FCAF3D or TR3D variants as the local network f may be considered. These alternatives have been tested and provide satisfactory results.

The function may optionally comprise a post-processing part that applies a post processing in the form of non-maximum suppression (NMS) to filter predictions and keep the most relevant ones.

The training may comprise minimizing a loss as known in the art, based on the labelled training samples. Like most deep learning methods, the function may be trained using a stochastic gradient descent algorithm, such as AdamW (discussed in reference I. Loshchilov and F. Hutter, "Decoupled Weight Decay Regularization." arXiv, Jan. 04, 2019. doi: 10.48550/arXiv.1711.05101, which is incorporated herein by reference) in implementations. In tests performed by the inventors, the proprietary training, validation and testing annotated datasets used for the function were generated synthetically using HomeByMe virtual scenes, obtained with the method of previously discussed European Patent Application EP23305001.2, as outlined above.

The training may comprise a batch training. Each batch may respect a frame chronological order so that, during the batch training, the function does not output localized representations for the batch based on frames associated with future times. In other words, for/during training, the aggregation network may operate in a batched mode, outputting all predictions corresponding to the input frames:

$$\left(\hat{B}_t, \hat{B}_{t-1}, ..., \hat{B}_{t-\delta t+1}\right) = g_{batch}(Z_t, Z_{t-1}, ..., Z_{t-\delta t+1}).$$

This batched mode respects the chronological order (a.k.a. causality): much like prediction $\hat{B}_t$ does not depend on $Z_{t+1}$, $\hat{B}_{t-1}$ does not depend on $Z_t$, but on all features with indices $\leq t - 1$. This allows to train the model on multiple frames and even multiple scenes in parallel using a graphical processing unit (GPU), while still providing a large number of predictions to be used in the loss function.

In implementations, the online neural network $g \circ f$ is implemented in Python, using the PyTorch library (discussed in reference A. Paszke et al., "PyTorch: An imperative style, high-performance deep learning library," in Advances in neural information processing systems 32, H. Wallach, H. Larochelle, A. Beygelzimer, F. d'Alché-Buc, E. Fox, and R. Garnett, Eds., Curran Associates, Inc., 2019, pp. 8024-8035. [Online]. Available: http://papers.neurips.cc/paper/9015-pytorch-an-imperative-style-high-performance-deep-learning-library.pdf, which is incorporated herein by reference) for auto-differentiation and Minkowski Engine (discussed in reference C. Choy, J. Gwak, and S. Savarese, "4D Spatio-Temporal ConvNets: Minkowski Convolutional Neural Networks." arXiv, Jun. 13, 2019. doi: 10.48550/arXiv.1904.08755, which is incorporated herein by reference) for sparse convolution operations.

Implementations of the training pipeline are illustrated by FIG. 4.

Results of tests performed by the inventors using the above-discussed implementations. The results are shown on Table 1 below:

*Table 1 - Online Test Results on a dataset obtained with the method of European Patent Application EP23305001.2*

| Metric \ Model | Baseline ($f$ = FCAF3D) | Function of the present disclosure ($f$ = FCAF3D) | Function of the present disclosure ($f$ = TR3D) |
|---|---|---|---|
| fmAP @0.50 ($\uparrow$) | 0.06 | 0.30 | **0.35** |
| fmAR @0.50 ($\uparrow$) | 0.22 | 0.56 | **0.6** |
| # params ($\downarrow$) | 90.6 M | 95.4 M | **21.6 M** |

As illustrated by the above table, quantitative results show that implementations of the method surpass the baseline approach by a large margin. The baseline method may be described as follows: instead of using the online model $\hat{B}_t = g \circ f(X_t, X_{t-1}, \ldots, X_{t-\delta t+1})$, the inventors have concatenated the last $\delta t$ frames $(X_t, X_{t-1}, \ldots, X_{t-\delta t+1})$ and have applied an offline method such as FCAF3D. This baseline method is arguably what a person having ordinary skill in the art would do in order to produce an online 3D object detection model.

The common metrics used in 3D Object Detection are mean average precision ($mAP$) and mean average recall ($mAR$). These metrics are defined using an intersection over union ($IoU$) *threshold* to evaluate the model's predictions. For a given class c, it is considered that a prediction bounding box is a *correct* prediction if it can be paired to a ground truth bounding box such that the $IoU$ (intersection over union) between the two bounding boxes is higher than a given *threshold.* Intersection over union ($IoU \in [0,1]$) may be described as follows. For 3D bounding boxes, these union and intersection values are computed as volumes; for the sake of clarity, the 2D equivalent is visualized as areas on FIG. 5. Example IoU thresholds for NMS (non-maximum suppression) are 0.25 and 0.5. Pairings are unique, in the sense that a given ground truth may be assigned at most one prediction, and vice-versa. Pairings are made by decreasing order of $IoU$ until either all ground truth or predicted bounding boxes are exhausted.

Consider the following definitions:

- **True Positive** (TP): correct model prediction, i.e. prediction that was matched with a bounding box of the same class such that $IoU > threshold.$
- **False Positive** (FP): incorrect model prediction, i.e. the model predicted a bounding box but no corresponding ground truth annotation was matched or $IoU \leq threshold.$
- **False Negative** (FN): missing prediction. An annotation that is not matched to any prediction (i.e. the object is present but was not detected by the model).
- **Precision** is the fraction of the positive predictions that are actually correct:

$$precision = \frac{TP}{TP + FP}$$

- **Recall** is the fraction of actual positive instances the model is able to correctly identify:

$$recall = \frac{TP}{TP + FN}$$

- **Precision-recall curve:** The trade-off between the quality and quantity of predicted bounding boxes can be controlled after inference, typically in the form of a confidence score that the model associates to each class and bounding box. This score can be thresholded to remove predictions that the model is not confident about, allowing to plot a graph of precision and recall as the confidence score threshold varies.

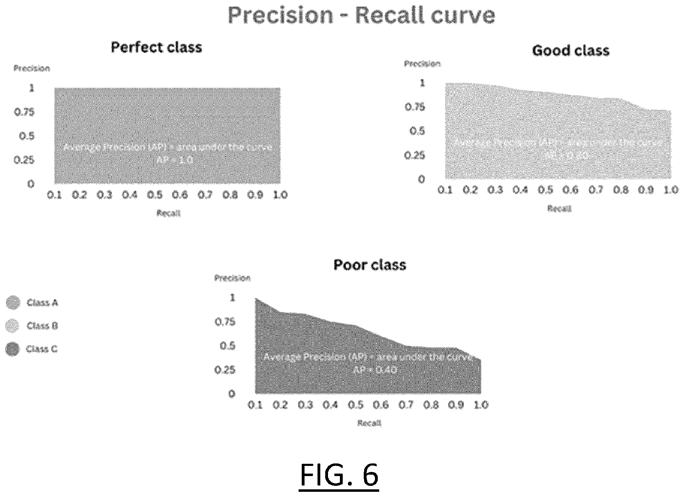

- **Average precision** (AP) is the area under the precision-recall curve for each class (illustrated by FIG. 6).
- **Mean average precision** *(mAP)* is the mean of APs across all classes. We usually denote *mAP_threshold* to specify at which IoU threshold we have computed the metrics (i.e. at which quality level).
- **Frame-wise Mean Average Precision** (fmAP) corresponds to mAP in the online setting, where precision and recall are not computed for each scene, but rather for each frame.
- **Average Precision (AR), mAR** and **fmAR** can be defined in a similar fashion.

It is also provided a function obtainable according to the method, i.e. a computer-implemented data structure forming the function on a computer system and having parameters (*e.g.* neural network weights) with values that would have resulted from the training according to the method. Such a function may be directly obtained from the method, *i.e.* the parameters' values directly result from the training according to the method. In any case, the data structure can be stored (and provided as such) on a computer (*e.g.* non-transitory) memory.

It is also provided a computer-implemented method of use of the function obtainable (*e.g.* having been learnt) by the method. The method of use comprises providing a sequence of 3D point cloud frames of a real scene. Providing the sequence of 3D point cloud frames may comprise, by a user or automatically, operating a 3D scanning device (*e.g.* integrated on the user's phone) and continuously or iteratively scanning the scene with the device. The scanning may directly result in 3D point cloud frames of the scene or may result in images of the scene (*e.g.* depth images). In the latter alternative, providing the sequence may comprise transforming each image into a 3D point cloud frame as known in the art, thereby yielding the sequence. Each frame of the sequence is associated with a time, which may be or stem from (*e.g.* up to a rescaling or the like), for example, an acquisition time provided by the scanning device. The method of use further comprises, for each frame of the sequence, determining localized representations each of a respective object of the real scene in the frame by applying the function to the frame. The application of the function is thus performed iteratively on each frame, one after the other. The application of the function is based at least on the feature vector corresponding to localized representations each of a respective object in the previous frame. For example, the application of the function may comprise, for each frame, applying the first neural network to the frame, thereby extracting a feature vector of the frame. Then, the application of the function may comprise applying the second neural network to perform aggregation of the feature vector extracted for the frame and of at least the feature vector extracted for the frame having the previous time (which implies that, in the aggregation, the feature vector for the frame having the previous time is used, and, optionally, one or more feature vectors of the frame(s) having the time(s) before that are also used). Final detection of the localized representation may then be performed, after aggregation, by application of the detection head previously discussed to the result of the aggregation. The learning method and the method of use may be integrated into a same computer-implemented method which comprises performing the learning method and then the method of use of the function learnt by the learning method.

The trained function thus provides computer-efficiency and accuracy when operating in an online setting, *i.e.* when applying the method of use. Indeed, by design, the heavier local network (backbone) is only evaluated once on each point cloud frame, and it is up to the lighter aggregation network to refine its outputs into frame-wise predictions. Thus, when applying the aggregation network to perform the aggregation of feature vectors, only the feature vector of the current frame and of the frame with the previous time (and optionally, where appropriate, of the one or more frames with the one or more times before that) need(s) to be stored on the RAM (random access memory) or VRAM (video RAM) of the underlying computer in the cache of a computer software application performing the method. By contrast, existing offline indoor 3D object detectors must be evaluated on the concatenation of all previous frames in the sequence to produce acceptable results. Accuracy comes from the fact that the aggregating network computes both spatial relationships, i.e. between different regions of the scene, and temporal relationships, i.e. between the different frames of the sequence. This efficient use of the RAM or cache notably allows real-time (*e.g.* substantially instantaneously while the scene is captures, *e.g.* scanned by a user moving in the scene) determination of the localized representations in the scene. This also allows to provide the user in real-time with visual feedback as to whether the scene acquisition has been well performed.

Furthermore, during point cloud acquisition, a user may move the scanning device to capture different parts of a given indoor scene. Indeed, some parts of the scene may have been occluded by other objects, or simply not present in the field of view of the device. In this context, the method, function, and method of use allow to output 3D semantic information relevant to the most recently captured points based on previously acquired data from the scene.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the method may be performed through user-computer interaction. The level of user-computer interaction required may depend on the level of au-tomatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 7 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for machine learning a function configured to take as input a 3D point cloud frame of a real scene and to output localized representations each of a respective object of the real scene, the method comprising:

   - obtaining a dataset of sequences of 3D point cloud frames, each frame being associated with a time in the sequence, each frame comprising localized representations each of a respective object; and
   - training the function based on the obtained dataset, the training comprising, for each sequence of the dataset and each given frame of the sequence, training the function to output localized representations of objects in the given frame based on the given frame and on at least the frame with the previous time in the sequence.

2. The method of claim 1, wherein the function comprises:

   - a first neural network configured to take as input a frame and to output at least a feature vector corresponding to localized representations each of a respective object in the frame; and
   - a second neural network configured to aggregate the feature vectors outputted by the first neural network for said given frame and for at least the frame with the previous time in the sequence.

3. The method of claim 2, wherein:

- the first neural network is configured to take as input a frame and to output two or more feature vectors each corresponding to a different resolution level; and
- the second neural network is configured to perform two or more aggregations each corresponding to the feature vectors of a same resolution level.

4. The method of claim 2 or 3, wherein:

- the first neural network is convolutional neural network (CNN); and/or
- the second neural network is a combination of transformer neural networks and convolutions.

5. The method of any one of claims 1 to 4, wherein each 3D point cloud frame of the real scene represents a partial view of the real scene.

6. The method of any one of claims 1 to 5, wherein the training comprises a batch training.

7. The method of claim 6, wherein each batch respects a frame chronological order so that, during the batch training, the function does not output localized representations for the batch based on frames associated with future times.

8. The method of any one of claims 1 to 7, wherein, in the obtained dataset, each sequence of point cloud frames ($X_1$, $X_2, \ldots, X_T$), where $X_t \in \mathbb{R}^{n_t \times 3}$ is the point cloud frame at time $t$ and contains $n_t$ points, is defined by the following rule:

$$\begin{cases} \forall t \in [\![1, T]\!], X_t := \displaystyle\bigcup_{v = k \times (t-1)+1}^{\max(k \times t, V)} \mathcal{T}(I_v) \\ T := ceil\left(\dfrac{V}{k}\right) \end{cases}$$

where *ceil* is a ceiling function, and ($I_1$, $I_2, \ldots, I_V$) is a sequence of depth images of the scene, and where $\mathcal{T}$ is a back-projection operator that projects a pixel of a depth image to a 3D point.

9. The method of any one of claims 1 to 8, wherein the scene is an indoor scene.

10. The method of any one of claims 1 to 9, wherein the 3D point cloud frames of the obtained dataset stem from physical measurements or from virtual measurements.

11. A function obtainable according to the method of any one of claims 1 to 10.

12. A computer-implemented method of use of the function according to claim 11, the method comprising:

- providing a sequence of 3D point cloud frames of a real scene; and
- for each frame of the sequence, determining localized representations each of a respective object of the real scene in the frame by applying the function to the frame based at least on a feature vector corresponding to localized representations each of a respective object in the previous frame.

13. A computer comprising instructions which, when executed by a computer, cause the computer to perform the method of any one of claims 1 to 10 and/or the method of claim 12.

14. A computer-readable data storage medium having recorded thereon the computer program of claim 13 and/or the function of claim 11.

15. A computer system comprising a processor coupled to a memory, the memory having recorded thereon the computer program of claim 13 and/or the function of claim 11.

# FIG. 1

# FIG. 2

FIG. 3

FIG. 4

$$IoU = \frac{\text{Area of Overlap}}{\text{Area of Union}}$$

FIG. 5

# Precision - Recall curve

### Perfect class

### Good class

### Poor class

Class A

Class B

Class C

# FIG. 6

1000

1010

CPU

RAM

1070

1020

Mass storage
devices controler

B
U
S

Display

1080

1030

Hard
drive

Haptic
device

1090

Network Adapter

Video
RAM

1100

1050

GPU

1110

Network

1060

## FIG. 7

Europäisches
Patentamt

European
Patent Office

Office européen
des brevets

**EUROPEAN SEARCH REPORT**

**Application Number**

**EP 24 30 5798**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUO ZHIPENG ET AL: "TransPillars: Coarse-to-Fine Aggregation for Multi-Frame 3D Object Detection", 2023 IEEE/CVF WINTER CONFERENCE ON APPLICATIONS OF COMPUTER VISION (WACV), IEEE, 2 January 2023 (2023-01-02), pages 4219-4228, XP034290921, DOI: 10.1109/WACV56688.2023.00421 [retrieved on 2023-02-06] * sections 1-4; page 4219 - page 4226 * ----- | 1-15 | INV. G06V10/44 G06V10/62 G06V10/764 G06V10/80 G06V10/82 G06V20/64 |
| X | LIU WEI ET AL: "STFormer3D: Spatio-Temporal Transformer Based 3D Object Detection for Intelligent Driving", PROCEEDINGS OF THE 2023 4TH INTERNATIONAL CONFERENCE ON COMPUTING, NETWORKS AND INTERNET OF THINGS, 26 May 2023 (2023-05-26), pages 415-420, XP093217492, ISBN: 979-8-4007-0070-5 Retrieved from the Internet: URL:https://dl.acm.org/doi/pdf/10.1145/3603781.3603857> * sections 1-4; page 415 - page 419 * ----- -/-- | 1-15 | TECHNICAL FIELDS SEARCHED (IPC) G06V |

The present search report has been drawn up for all claims

| Place of search | Date of completion of the search | Examiner |
|---|---|---|
| The Hague | 6 November 2024 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

Europäisches Patentamt

European Patent Office

Office européen des brevets

# EUROPEAN SEARCH REPORT

**Application Number**

EP 24 30 5798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAI ZHENYU ET AL: "Muti-Frame Point Cloud Feature Fusion Based on Attention Mechanisms for 3D Object Detection", SENSORS, vol. 22, no. 19, 2 October 2022 (2022-10-02), page 7473, XP093217645, CH ISSN: 1424-8220, DOI: 10.3390/s22197473 Retrieved from the Internet: URL:https://www.mdpi.com/1424-8220/22/19/7473/pdf> * sections 1-4; page 1 - page 14 * | 1-15 | |
| X | WANG JUN ET AL: "PointMotionNet: Point-Wise Motion Learning for Large-Scale LiDAR Point Clouds Sequences", 2022 IEEE/CVF CONFERENCE ON COMPUTER VISION AND PATTERN RECOGNITION WORKSHOPS (CVPRW), IEEE, 19 June 2022 (2022-06-19), pages 4418-4427, XP034173880, DOI: 10.1109/CVPRW56347.2022.00488 [retrieved on 2022-08-23] * sections 1-5; page 4418 - page 4425 * | 1-15 | TECHNICAL FIELDS SEARCHED (IPC) |

The present search report has been drawn up for all claims

| Place of search | Date of completion of the search | Examiner |
|---|---|---|
| The Hague | 6 November 2024 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- EP 23305001

**Non-patent literature cited in the description**

- **D. RUKHOVICH** ; **A. VORONTSOVA** ; **A. KONUSHIN**. FCAF3D: Fully Convolutional Anchor-Free 3D Object Detection.. *arXiv*, 24 March 2022, http://arxiv.org/abs/2112.00322
- **D. RUKHOVICH** ; **A. VORONTSOVA** ; **A. KONUSHIN**. TR3D: Towards Real-Time Indoor 3D Object Detection.. *arXiv*, 08 February 2023
- **S. SONG** ; **S. P. LICHTENBERG** ; **J. XIAO**. SUN RGB-D: A RGB-D Scene Understanding Benchmark Suite. *Proceedings of the IEEE Conference on Computer Vision and Pattern Recognition*, 2015, 567-576, https://openac-cess.thecvf.com/content_cvpr_2015/html/Song_SUN_RGB-D_A_2015_CVPR_paper.html
- **A. DAI** ; **A. X. CHANG** ; **M. SAVVA** ; **M. HALBER** ; **T. FUNKHOUSER** ; **M. NIEßNER**. ScanNet: Richly-annotated 3D Reconstructions of Indoor Scenes. *arXiv*, 11 April 2017
- **G. BARUCH et al.** ARKitScenes: A diverse real-world dataset for 3D indoor scene understanding using mobile RGB-D data. *Thirty-fifth conference on neural information processing systems datasets and benchmarks track (round 1)*, 2021, https://openreview.net/forum?id=tjZjv_qh_CE
- **C. CHOY** ; **J. GWAK** ; **S. SAVARESE**. 4D Spatio-Temporal ConvNets: Minkowski Convolutional Neural Networks.. *arXiv*, 13 June 2019
- **R. GIRSHICK** ; **J. DONAHUE** ; **T. DARRELL** ; **J. MA-LIK**. Rich feature hierarchies for accurate object detection and semantic segmentation.. *arXiv*, 22 October 2014
- 3D Parametric Room Representation with Room-Plan. *Apple Machine Learning Research*, 13 October 2022, https://ma-chinelearning.apple.com/research/roomplan

- **A. H. LANG** ; **S. VORA** ; **H. CAE-SAR** ; **L. ZHOU** ; **J. YANG** ; **O. BEIJBOM**. PointPillars: Fast Encoders for Object Detection From Point Clouds. *Proceedings of the IEEE/CVF Conference on Computer Vision and Pattern Recognition*, 2019, 12697-12705, https://o-penaccess.thecvf.com/content_CVPR_2019/html/-Lang_PointPillars_Fast_EncodersforObject_Detection_From_Point_Clouds_CVPR_2019_paper.html
- **Z. LIU et al.** BEVFusion: Multi-Task Multi-Sensor Fusion with Unified Bird's-Eye View Representation.. *arXiv*, 16 June 2022
- **H. HU et al.** EA-LSS: Edge-aware Lift-splat-shot Framework for 3D BEV Object Detection.. *arXiv*, 29 August 2023
- **LUO, G. ZHANG** ; **C. ZHOU** ; **T. LIU** ; **S. LU** ; **L. PAN**. TransPillars: Coarse-to-Fine Aggregation for Multi-Frame 3D Object Detection.. *arXiv*, 04 August 2022
- **A. VASWANI et al.** Attention Is All You Need.. *arXiv*, 05 December 2017
- **X. ZHU** ; **W. SU** ; **L. LU** ; **B. LI** ; **X. WANG** ; **J. DAI**. Deformable DETR: Deformable Transformers for End-to-End Object Detection.. *arXiv*, 17 March 2021, http://arxiv.org/abs/2010.04159
- **I. LOSHCHILOV** ; **F. HUTTER**. Decoupled Weight Decay Regularization.. *arXiv*, 04 January 2019
- PyTorch: An imperative style, high-performance deep learning library. **A. PASZKE et al.** Advances in neural information processing systems. Curran Associates, Inc., 2019, vol. 32, 8024-8035